# EUROPEAN PATENT SPECIFICATION

(11) **EP 3 691 765 B1**
(45) Date of publication and mention of the grant of the patent: **13.03.2024**
(21) Application number: 19861027.1
(22) Date of filing: 31.07.2019
(51) Int. Cl.: A63F 13/35

(54) **METHOD AND SYSTEM FOR GAME DATA PROCESSING, SERVER AND COMPUTER READABLE STORAGE MEDIUM**
VERFAHREN UND SYSTEM ZUR SPIELDATENVERARBEITUNG, SERVER UND COMPUTERLESBARES SPEICHERMEDIUM
PROCÉDÉ ET SYSTÈME DE TRAITEMENT DE DONNÉES DE JEU, SERVEUR ET SUPPORT D'INFORMATIONS LISIBLE PAR ORDINATEUR

(30) Priority: 14.09.2018 CN 201811074739
(43) Date of publication of application: 12.08.2020
(73) Proprietor: Beijing Elex Technology Co. Ltd., Beijing 100001 (CN)
(72) Inventor: BI, Wei, Beijing 100001 (CN)
(74) Representative: advotec.
(86) International application number: PCT/CN2019/098543
(87) International publication number: WO 2020/052358

(56) References cited:
- CN-A- 1 945 538
- CN-A- 102 663 096
- CN-A- 106 354 817
- CN-A- 108 073 444
- CN-A- 109 395 380
- US-A1- 2011 314 444
- Anonymous: "BungeeCord Installation | SpigotMC - High Performance Minecraft", , 17 July 2017 (2017-07-17), XP055796616, Retrieved from the Internet: URL:https://web.archive.org/web/2017071707 0401/https://www.spigotmc.org/wiki/bungeec ord-installation/ [retrieved on 2021-04-19]
- Anonymous: "About BungeeCord | SpigotMC - High Performance Minecraft", , 31 January 2017 (2017-01-31), XP055796619, Retrieved from the Internet: URL:https://web.archive.org/web/2017013123 5407/https://www.spigotmc.org/wiki/about-b ungeecord/ [retrieved on 2021-04-19]
- Compton Jason: "Build a Multiplayer PC Gaming Server | CRN", , 17 April 2014 (2014-04-17), XP055796567, Retrieved from the Internet: URL:https://web.archive.org/web/2014041719 1125/https://www.crn.com/recipes/channel-p rograms/163103737/build-a-multiplayer-pc-g aming-server.htm [retrieved on 2021-04-19]

## Description

### TECHNICAL FIELD

The present disclosure relates to data processing technology, and more particularly, to a method and a system for game data processing, a server and a computer readable storage medium.

### BACKGROUND

Currently, in an online game, most of operations at clients need to be transmitted to a server immediately for computation and mediation, and then the server can return results to the clients for display, e.g., in a real time combat between players. Thus, the game experience of the players depends directly on the instruction response time at the server. On the other hand, the more clients the game server can support concurrently, the better the ecology and revenue of the game will be. Transactions Per Second (TPS), i.e., the number of client instructions that can be processed per second, is an important indicator for measuring the concurrency capability of the server. Accordingly, it is an important object to reduce the average instruction response time and increase the TPS of the game server. Anonymous: "BungeeCord Installation| SpigotMC - High Performance Minecraft", 17 July 2017 (2017-07-17), XP055796616, retrieved from the Internet: URL:https://web.archive.org/web/20170717070401/https:// www.spigotmc.org/wiki/bungeecord-installation/ refers to guides to installing BungeeCord on operation systems, such as Windows, Linux, Mac OS X, and also refers to Multicraft, general installation advice, and post-installation. The section of post-installation refers to BungeeCord and servers on the same machine, BungeeCord on a GPS (Minecraft host), and BungeeCord and servers on different machines. Anonymous: "About BungeeCord | SpigotMC - High Performance Minecraft", 31 January 2017 (2017-01-31), XP055796619, Retrieved from the Internet: URL: https://web.archive.org/web/20170131235407/ https:// www.spigotmc.org/wiki/about-bungeecord/ refers to the introduction of BungeeCord, for example, what it is, how it works, and features thereof. CN 102663096 A refers to a method for reading data based on a data cache technology. According to the method, by adopting an internal memory cache mechanism, user characteristic data corresponding users in a cache region are divided into different active levels according to vitality values, a chain table corresponding to each active level is established, a header of each chain table is marked, and the header of the chain table with the low active level points to the tail of the chain table with the relatively high active level, so that when data is read by many users, the user characteristic data to be accessed can be searched through the header of the chain table with the marked header, the data is read from an internal memory in a point-to-point manner, the consumption of loading the data from a database is reduced, the data loading speed is improved, the load of the database is lowered, and the user experience is promoted; meanwhile, a load of an input/output (IO) port is reduced by unoccupied internal memory, and the use of server hardware resources is balanced. Compton Jason: "Build a Multiplayer PC Gaming Server I CRN", , 17 April 2014 (2014-04-17), XP055796567, retrieved from the Internet: URL: https://web.archive.org/web/20140417191125/ https://www.crn.com/ recipes/channel-programs/163103737/build-a-multiplayer-pc-gaming- server.htm refers to building a multiplayer PC gaming server, which includes seventeen detailed steps.

However, in the related art, all game logics are typically processed by one primary logic thread. Due to the limited processing capability of the single thread, the overall TPS is limited, resulting in long average instruction response time and thus degraded game user experience.

Therefore, how to reduce the impact of the game logic processing on the game user experience has become a technical problem to be solved currently.

### SUMMARY

The embodiments of the present disclosure provide a method and a system for game data processing, a server and a computer readable storage medium, capable of solving the technical problem in the related art associated with the degraded game user experience due to the long average instruction response time of the game logic processing, such that the impact of the game logic processing on the game user experience can be reduced and the game user experience can be improved.

In a first aspect, according to an embodiment of the present disclosure, a method for game data processing is provided. The method is performed by the server and includes: obtaining a data processing instruction from a client; determining a group to which a logged-in user of the client belongs based on user information in the data processing instruction; determining a target thread corresponding to the group from a plurality of data processing threads of the server, where a corresponding data processing thread of the plurality of data processing threads is configured for each group in the server; and executing the data processing instruction by the target thread, so as to process user data corresponding to the user information in a memory of the server. The method further includes, prior to obtaining the data processing instruction from the client: selecting from all users a target user satisfying a predetermined rule based on server start information, where the predetermined rule includes: an online time length of a user within a predetermined time interval being larger than or equal to a predetermined time length; and loading user data of the target user into the memory of the server.

Optionally, in the above embodiment of the present disclosure, the method can further include, prior to obtaining the data processing instruction from the client: loading all user data in a database into the memory of the server in accordance with server start information.

Optionally, in the above embodiment of the present disclosure, the predetermined rule further includes a login frequency of a user being higher than or equal to a predetermined frequency,.

Optionally, in the above embodiment of the present disclosure, the method can further include, prior to executing the data processing instruction by the target thread: determining whether the logged-in user of the client is the target user based on the user information in the data processing instruction. The step of executing the data processing instruction by the target thread can include: processing, by the target thread, the user data of the logged-in user in the memory of the server when it is determined that the logged-in user is the target user, or loading the user data of the logged-in user in the memory of the server and processing, by the target thread, the user data of the logged-in user in the memory, when it is determined that the logged-in user is not the target user.

Optionally, in the above embodiment of the present disclosure, a number of the plurality of data processing threads of the server can be smaller than or equal to 1/2 of a total number of physical threads of the server.

Optionally, in the above embodiment of the present disclosure, the method can further include, prior to obtaining the data processing instruction from the client: dividing users into groups based on user information associated with each user, each user belonging to one group and one group including a plurality of users; and configuring for each of the groups one corresponding data processing thread from the plurality of data processing threads of the server.

Optionally, in the above embodiment of the present disclosure, the step of executing the data processing instruction by the target thread can include: determining whether an object to be processed by the data processing instruction is user data of a plurality of users; calculating processing information for the user data of each of the plurality of users based on the data processing instruction when it is determined that the object to be processed by the data processing instruction is the user data of the plurality of users; processing the user data of each of the plurality of users based on the processing information in the target thread corresponding to that user; and processing, when it is determined that the object to be processed by the data processing instruction is user data of a single user, the user data of the single user.

In a second aspect, according to an embodiment of the present disclosure, a system for game data processing is provided. The system includes: an instruction obtaining unit configured to obtain a data processing instruction from a client; a group determining unit configured to determine a group to which a logged-in user of the client belongs based on user information in the data processing instruction; a thread determining unit configured to determine a target thread corresponding to the group from a plurality of data processing threads of a server; and a data processing unit configured to execute the data processing instruction by the target thread, so as to process user data corresponding to the user information in a memory of the server. The system can further include: a second memory loading unit configured to, prior to the instruction obtaining unit obtaining the data processing instruction from the client: select from all users a target user satisfying a predetermined rule based on server start information, the predetermined rule including an online time length of a user within a predetermined time interval being larger than or equal to a predetermined time length; and load user data of the target user into the memory of the server.

Optionally, in the above embodiment of the present disclosure, the system can further include: a first memory loading unit configured to, prior to the instruction obtaining unit obtaining the data processing instruction from the client: load all user data in a database into the memory of the server in accordance with server start information.

Optionally, in the above embodiment of the present disclosure, the predetermined rule includes an online time length of a user within a predetermined time interval being larger than or equal to a predetermined time length.

Optionally, in the above embodiment of the present disclosure, the system can further include: a first determining unit configured to, prior to the instruction obtaining unit obtaining the data processing instruction from the client: determine whether the logged-in user of the client is the target user based on the user information in the data processing instruction. The data processing unit can be configured to: process, by the target thread, the user data of the logged-in user in the memory of the server when it is determined that the logged-in user is the target user, or load the user data of the logged-in user in the memory of the server and process, by the target thread, the user data of the logged-in user in the memory, when it is determined that the logged-in user is not the target user.

Optionally, in the above embodiment of the present disclosure, a number of the plurality of data processing threads of the server can be smaller than or equal to 1/2 of a total number of physical threads of the server.

Optionally, in the above embodiment of the present disclosure, the system can further include a grouping unit configured to, prior to the instruction obtaining unit obtaining the data processing instruction from the client: divide users into groups based on user information associated with each user, each user belonging to one group and one group including a plurality of users; and a thread allocating unit configured to configure for each of the groups one corresponding data processing thread from the plurality of data processing threads of the server.

Optionally, in the above embodiment of the present disclosure, the data processing unit can include: a second determining unit configured to determine whether an object to be processed by the data processing instruction is user data of a plurality of users; calculate processing information for the user data of each of the plurality of users based on the data processing instruction when it is determined that the object to be processed by the data processing instruction is the user data of the plurality of users; process the user data of each user based on the processing information in the target thread corresponding to that user; process, when it is determined that the object to be processed by the data processing instruction is user data of a single user, the user data of the single user.

In a third aspect, according to an embodiment of the present disclosure, a server is provided. The server includes at least one processor and a memory communicatively connected to the at least one processor. The memory stores instructions executable by the at least one processor, the instructions being configured to perform any of the above methods according to the first aspect.

In a fourth aspect, according to an embodiment of the present disclosure, a computer readable storage medium is provided. The computer readable storage medium has computer executable instructions stored thereon, the computer executable instructions being configured to perform any of the above methods according to the first aspect.

With the above solutions, in order to solve the technical problem in the related art associated with the degraded game user experience due to the long average instruction response time of the game logic processing, a solution of processing data processing instructions from a client in multiple threads. In particular, when a data processing instruction is received from a client, user information contained in the data processing instruction can be read. The user information here may include, but not limited to, physical identification (ID) information and/or personal ID information of a logged-in user of the client. A game section to which the user belongs, a base station via which the user has logged in, or a personal identity of the user can be determined based on the user information. Since the user has been assigned to a group based on the user information in the server, the group to which the logged-in user of the client belongs can be determined based on the user information.

Next, since a corresponding data processing thread has been configured for each group in the server, a target thread that can be used for the group to which the logged-in user of the client can be determined accordingly, and then the user data of the logged-in user can be processed by the target thread. The target thread can be used directly to process the user data of the logged-in user in the memory of the server. That is, the user data in a database has been loaded into the memory of the server, and thus the data in the memory can be processed directly.

In this way, one user belongs to only one group, which may include a plurality of users. The user data of the users in one group can be processed by one corresponding data processing thread. Hence, it is possible to effectively prevent the user data of one user from being modified by a plurality of threads concurrently, without using schemes such as memory lock. In a data processing process, especially one with high concurrency, it is possible to reduce errors that may occur in multi-thread data processing, improve the accuracy of the data processing, eliminate the need to use any memory lock in multi-thread data processing and simplify the process of multi-thread data processing, such that the average instruction response time can be significantly reduced and the overall data processing efficiency of the server and the user experience can be improved.

### BRIEF DESCRIPTION OF DRAWINGS

In order to more clearly illustrate technical solutions of embodiments of the present disclosure, the accompanying drawings used in the embodiments are briefly described below. The drawings described below are merely a part of the embodiments of the present disclosure. Based on these drawings, those skilled in the art can obtain other drawings without any creative effort.
Fig. 1 is a flowchart illustrating a method for game data processing according to an embodiment of the present disclosure;
Fig. 2 is a flowchart illustrating a method for game data processing according to another embodiment of the present disclosure;
Fig. 3 is a flowchart illustrating a method for game data processing according to yet another embodiment of the present disclosure;
Fig. 4 is a block diagram of a system for game data processing according to an embodiment of the present disclosure; and
Fig. 5 is a block diagram of a server according to an embodiment of the present disclosure.

### DESCRIPTION OF EMBODIMENTS

In order to better understand technical solutions of the present disclosure, the embodiments of the present disclosure are described in details with reference to the drawings.

It should be clear that the described embodiments are merely part of the embodiments of the present disclosure rather than all of the embodiments. All other embodiments obtained by those skilled in the art without paying creative labor shall fall into the protection scope of the present disclosure.

The terms used in the embodiments of the present disclosure are merely for the purpose of describing specific embodiment, rather than limiting the present disclosure. The terms "a", "an", "the" and "said" in a singular form in the embodiments of the present disclosure and the attached claims are also intended to include plural forms thereof, unless noted otherwise.

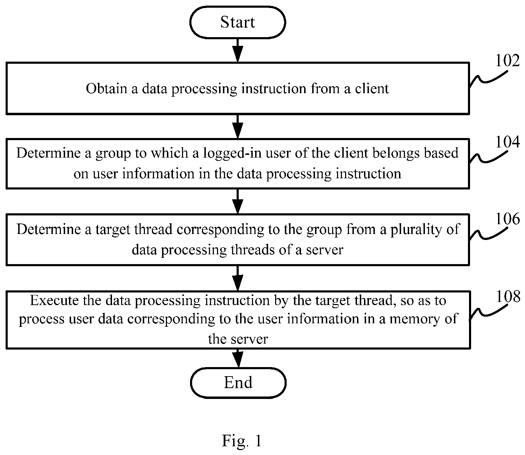

Fig. 1 is a flowchart illustrating a method for game data processing according to an embodiment of the present disclosure.

As shown in Fig. 1, a method for game data processing according to an embodiment of the present disclosure includes the following steps.

At step 102, a data processing instruction is obtained from a client.

At step 104, a group to which a logged-in user of the client belongs is determined based on user information in the data processing instruction.

After the data processing instruction is obtained from the client, the user information contained in the data processing instruction can be read. The user information here may include, but not limited to, physical identification (ID) information and/or personal ID information of a logged-in user of the client. A game section to which the user belongs, a base station via which the user has logged in, or a personal identity of the user can be determined based on the user information. Since the user has been assigned to a group based on the user information in the server, the group to which the logged-in user of the client belongs can be determined based on the user information.

At step 106, a target thread corresponding to the group is determined from a plurality of data processing threads of a server.

Here, the number of the data processing threads of the server can be smaller than or equal to 1/2 of a total number of physical threads of the server. In this case, it can guarantee that the number of the data processing threads is smaller than the total number of physical threads of the server, such that the game or other functions of the server will not be affected due to too many threads being used for processing the game logics.

At step 108, the data processing instruction is executed by the target thread, so as to process user data corresponding to the user information in a memory of the server.

Since a corresponding data processing thread has been configured for each group in the server, a target thread that can be used for the group to which the logged-in user of the client can be determined accordingly, and then the user data of the logged-in user can be processed by the target thread. The target thread can be used directly to process the user data of the logged-in user in the memory of the server. That is, the user data in a database has been loaded into the memory of the server, and thus the data in the memory can be processed directly.

With the above solution, one user belongs to only one group, which may include a plurality of users. The user data of the users in one group can be processed by one corresponding data processing thread. Hence, it is possible to effectively prevent the user data of one user from being modified by a plurality of threads concurrently, without using schemes such as memory lock. In a data processing process, especially one with high concurrency, it is possible to reduce errors that may occur in multi-thread data processing, improve the accuracy of the data processing, eliminate the need to use any memory lock in multi-thread data processing and simplify the process of multi-thread data processing, such that the average instruction response time can be significantly reduced and the overall data processing efficiency of the server and the user experience can be improved.

In an implementation of the present disclosure, before the step 102, all user data in a database can be loaded into the memory of the server in accordance with server start information. The server start information refers to a started indication automatically issued when the server is started. This indication can trigger the operation of loading all the user data in the database into the memory of the server. In this way, while the data processing instruction is executed by the target thread, the user data of any user can be processed directly in the memory of the server, which improves the efficiency in data processing.

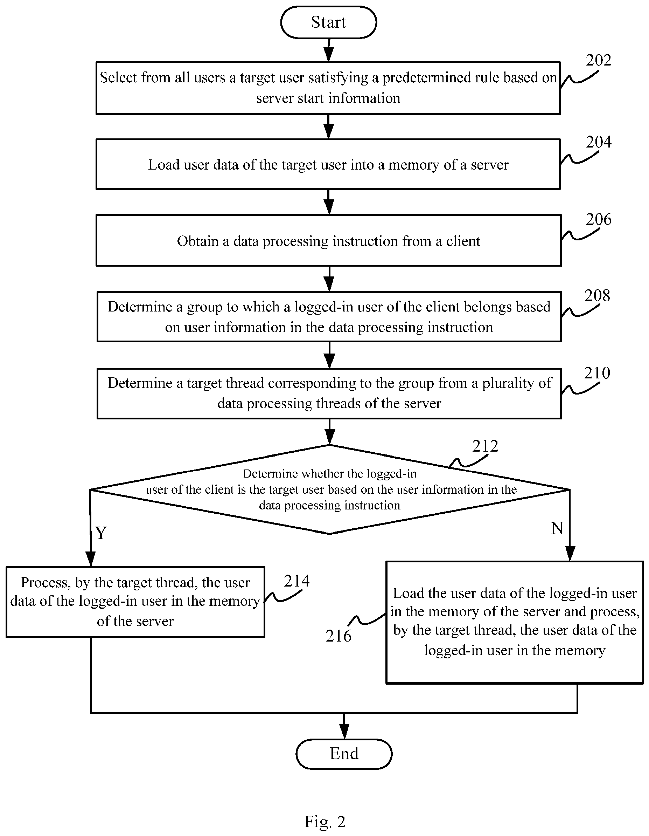

In an implementation of the present disclosure, before the step 102, in order to reduce the occupation of the memory of the server, only user data of a part of users can be loaded into the memory of the server. In particular, as shown in Fig. 2, the process includes the following steps.

At step 202, the target user satisfying a predetermined rule is selected from all users based on server start information. The server start information refers to a started indication automatically issued when the server is started. This indication can trigger the operation of loading all the user data in the database into the memory of the server.

Here, the predetermined rule includes: a login frequency of a user being higher than or equal to a predetermined frequency, and/or an online time length of a user within a predetermined time interval being larger than or equal to a predetermined time length.

It can be seen that the target user satisfying the predetermined rule is a user having a high login frequency and/or a large online time length, i.e., an active user. The rule that the login frequency of the user is higher than or equal to the predetermined frequency and the rule that the online time length of the user within the predetermined time interval is larger than or equal to the predetermined time length can be used separately or can be combined in order to determine accurately whether the user is an active user.

At step 204, user data of the target user is loaded into a memory of a server.

Only the user data of the active user is loaded into the memory of the server, so as to avoid high occupancy of the memory due to the user data of all users being loaded into the memory, and thus avoid affecting operating performance and running speed of the server due to high occupancy of the memory.

At step 206, a data processing instruction is obtained from a client.

At step 208, a group to which a logged-in user of the client belongs is determined based on user information in the data processing instruction.

At step 210, a target thread corresponding to the group is determined from a plurality of data processing threads of the server.

At step 212, it is determined whether the logged-in user of the client is the target user based on the user information in the data processing instruction. If so, the process proceeds with step 214, or otherwise the process proceeds with step 216.

At step 214, the user data of the logged-in user in the memory of the server is processed by the target thread.

At step 216, the user data of the logged-in user is loaded in the memory of the server and the user data of the logged-in user in the memory is processed by the target thread.

Since only the user data of the active user is loaded into the memory of the server in advance, here it needs to determine the attribute of the logged-in user of the client. If the logged-in user of the client is determined as the target user, i.e., an active user, the user data of the logged-in user of the client has already existed in the memory of the server and can be processed directly. If the logged-in user of the client is not the target user, i.e., an inactive user, the user data of the logged-in user needs to be first loaded into the memory of the server and then processed in the memory.

With the solution, only the user data of the active user is loaded into the memory of the server, so as to reduce the occupancy of the memory by the user data and effectively prevent the operating performance and running speed of the server from being affected.

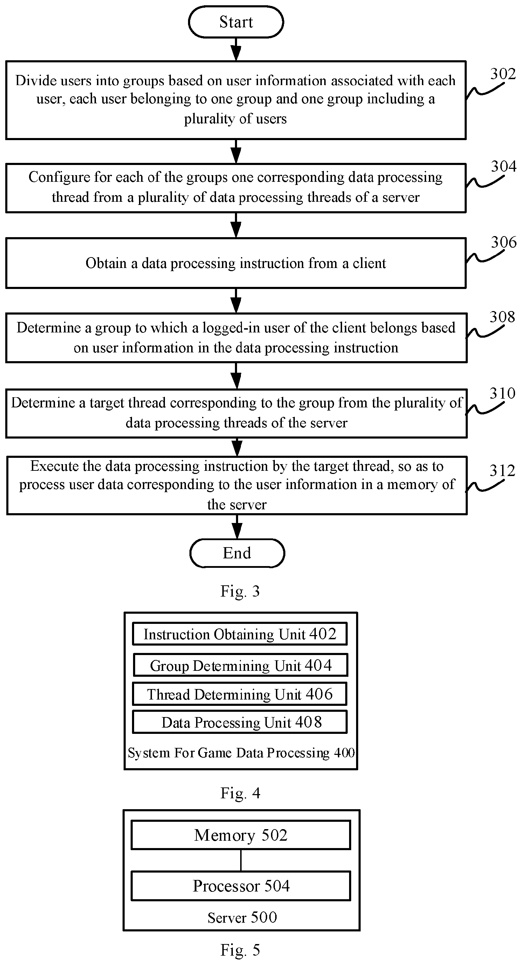

Fig. 3 is a flowchart illustrating a method for game data processing according to yet another embodiment of the present disclosure.

As shown in Fig. 3, a method for game data processing according to yet another embodiment of the present disclosure includes the following steps.

At step 302, users are divided into groups based on user information associated with each user, each user belonging to one group and one group including a plurality of users.

The user information here may include, but not limited to, physical identification (ID) information and/or personal ID information of a logged-in user of the client. A game section to which the user belongs, a base station via which the user has logged in, or a personal identity of the user can be determined based on the user information. Accordingly, users in the same game section, users from base stations in the same region or users in the same age group can be assigned to one group.

At step 304, one corresponding data processing thread from a plurality of data processing threads of a server is configured for each of the groups.

One user belongs to only one group, which may include a plurality of users. The user data of the users in one group can be processed by one corresponding data processing thread. Hence, it is possible to effectively prevent the user data of one user from being modified by a plurality of threads concurrently, without using schemes such as memory lock. In a data processing process, especially one with high concurrency, it is possible to reduce errors that may occur in multi-thread data processing, improve the accuracy of the data processing, eliminate the need to use any memory lock in multi-thread data processing and simplify the process of multi-thread data processing, such that the average instruction response time can be significantly reduced and the overall data processing efficiency of the server and the user experience can be improved.

At step 306, a data processing instruction is obtained from a client.

At step 308, a group to which a logged-in user of the client belongs is determined based on user information in the data processing instruction. As the users have been divided into groups based on the user information in the server, the group to which the logged-in user of the client belongs can be determined here based on user information.

At step 310, a target thread corresponding to the group is determined from the plurality of data processing threads of the server.

At step 312, the data processing instruction is executed by the target thread, so as to process user data corresponding to the user information in a memory of the server.

In an implementation of the present disclosure, in the step 302, it can be determined whether an object to be processed by the data processing instruction is user data of a plurality of users. When it is determined that the object to be processed by the data processing instruction is the user data of the plurality of users, processing information for the user data of each of the plurality of users is calculated based on the data processing instruction. The user data of each user is processed based on the processing information in the target thread corresponding to that user. When it is determined that the object to be processed by the data processing instruction is user data of a single user, the user data of the single user is processed.

That is, it needs to determine whether the data processing instruction is to process, e.g., modify, user data of a plurality of users. If so, it needs to calculate processing information for each user first, i.e., how to modify the user data of each user, and then accordingly modify the user data of each user based on the processing information for that user in the target thread corresponding to that user. Thus, in the data processing process, especially one with high concurrency, it can be guaranteed that the user data of one user can only be modified by its corresponding target thread, so as to reduce errors that may occur in multi-thread data processing and improve the accuracy of the data processing

For example, in a game, Player A attacks Player B and wins to obtain resources. The instruction of obtaining resources will increase resources of Player A and reduce resources of Player B. Thus, it is needed to modify and process the user data of both Player A and Player B. In doing so, a pre-calculation can be performed and then specific modifications can be separated into modifications in respective threads of the two players. That is, the number of resources Player A can get from Player B can be pre-calculated in the target thread of the attacking Player A, and then the number of resources can be added to Player A in the target thread corresponding to Player A while subtracting the number of resources from Player B in the target thread corresponding to Player B.

Fig. 4 is a block diagram of a system for game data processing according to an embodiment of the present disclosure.

As shown in Fig. 4, a system 400 for game data processing is provided according to an embodiment of the present disclosure. The system 400 includes: an instruction obtaining unit 402 configured to obtain a data processing instruction from a client; a group determining unit 404 configured to determine a group to which a logged-in user of the client belongs based on user information in the data processing instruction; a thread determining unit 406 configured to determine a target thread corresponding to the group from a plurality of data processing threads of a server; and a data processing unit 408 configured to execute the data processing instruction by the target thread, so as to process user data corresponding to the user information in a memory of the server.

The system 400 for game data processing uses any of the solutions described in the embodiments shown in Figs. 1-3, and thus has all of the above technical effects, the description of which will be omitted here. The system 400 for game data processing may include the following technical features.

Optionally, in the above embodiment of the present disclosure, the system can further include: a first memory loading unit configured to, prior to the instruction obtaining unit 402 obtaining the data processing instruction from the client: load all user data in a database into the memory of the server in accordance with server start information.

Optionally, in the above embodiment of the present disclosure, the system can further include: a second memory loading unit configured to, prior to the instruction obtaining unit 402 obtaining the data processing instruction from the client: select from all users a target user satisfying a predetermined rule based on server start information, the predetermined rule including: a login frequency of a user being higher than or equal to a predetermined frequency, and/or an online time length of a user within a predetermined time interval being larger than or equal to a predetermined time length; and load user data of the target user into the memory of the server.

Optionally, in the above embodiment of the present disclosure, the system can further include: a first determining unit configured to, prior to the instruction obtaining unit 402 obtaining the data processing instruction from the client: determine whether the logged-in user of the client is the target user based on the user information in the data processing instruction. The data processing unit 408 can be configured to: process, by the target thread, the user data of the logged-in user in the memory of the server when it is determined that the logged-in user is the target user, or load the user data of the logged-in user in the memory of the server and process, by the target thread, the user data of the logged-in user in the memory, when it is determined that the logged-in user is not the target user.

Optionally, in the above embodiment of the present disclosure, the number of the data processing threads of the server can be smaller than or equal to 1/2 of a total number of physical threads of the server.

Optionally, in the above embodiment of the present disclosure, the system can further include a grouping unit configured to, prior to the instruction obtaining unit 402 obtaining the data processing instruction from the client: divide users into groups based on user information associated with each user, each user belonging to one group and one group including a plurality of users; and a thread allocating unit configured to configure for each of the groups one corresponding data processing thread from the plurality of data processing threads of the server.

Optionally, in the above embodiment of the present disclosure, the data processing unit 408 can include: a second determining unit configured to determine whether an object to be processed by the data processing instruction is user data of a plurality of users; calculate processing information for the user data of each of the plurality of users based on the data processing instruction when it is determined that the object to be processed by the data processing instruction is the user data of the plurality of users; process the user data of each user based on the processing information in the target thread corresponding to that user; process, when it is determined that the object to be processed by the data processing instruction is user data of a single user, the user data of the single user.

Fig. 5 is a block diagram of a server according to an embodiment of the present disclosure.

As shown in Fig. 5, a server 500 according to an embodiment of the present disclosure includes at least one processor 502 and a memory 504 communicatively connected to the at least one processor 502. The memory stores instructions executable by the at least one processor 504, the instructions being configured to perform any of the solutions in the embodiments described above in connection with Figs. 1-3. Thus, the server 500 has the same technical effects as any of the embodiments described in Figs. 1-3, the description of which will be omitted here.

In addition, according to an embodiment of the present disclosure, a computer readable storage medium is provided. The computer readable storage medium has computer executable instructions stored thereon. The computer executable instructions are configured to perform any of the methods in the embodiments described above in connection with Figs. 1-3.

The solutions of the present disclosure have been described in detail above with reference to the figures. With the above solutions, in a data processing process, especially one with high concurrency, it is possible to reduce errors that may occur in multi-thread data processing, improve the accuracy of the data processing, eliminate the need to use any memory lock in multi-thread data processing and simplify the process of multi-thread data processing, such that the average instruction response time can be significantly reduced and the overall data processing efficiency of the server and the user experience can be improved.

It should be understood that the term "and/or" used in the context of the present disclosure is to describe a correlation relation of related objects, indicating that there may be three relations, e.g., A and/or B may indicate only A, both A and B, and only B. In addition, the symbol "/" in the context generally indicates that the relation between the objects in front and at the back of "/" is an "or" relationship.

It should be understood that although the terms 'first' and 'second' may be used in the present disclosure to describe determining units, the determining units should not be limited to these terms. These terms are used only to distinguish the determining units from each other. For example, without departing from the scope of the embodiments of the present disclosure, a first determining unit may also be referred to as a second determining unit. Similarly, the second determining unit may also be referred to as the first determining unit.

Depending on the context, the term "if' as used herein can be interpreted as "when", "in a case where", "in response to determining ..." or "in response to detecting ...". Similarly, depending on the context, the phrase "if it is determined ..." or "if it is detected ... (a statement of a condition or event)" can be interpreted as "when it is determined ...", "in response to determining ... ", "when it is detected ... (a statement of a condition or event)", or "in response to detecting ... (a statement of a condition or event)".

It can be appreciated from the embodiments of the present disclosure that the disclosed systems, apparatuses and methods can be implemented in alternative ways. The apparatus embodiments as described above are illustrative only. For example, while the modules have been divided in accordance with their logical functions, other divisions are possible in practice. For example, more than one module or element can be combined or can be integrated into another system, or some features can be ignored or omitted. In addition, the coupling, direct coupling or communicative connection between various components as shown or discussed can be an indirect coupling or communicative connection via some interface, device or module and can be electrical, mechanical or in another form.

Further, all the functional modules in various embodiments of the present disclosure can be integrated within one processing module, each of these modules can be a separate module, or two or more modules can be integrated into one module. Such integrated module can be implemented in hardware, possibly in combination with software functional modules.

The above integrated modules, when implemented in software functional modules, can be stored in a computer readable storage medium. The software functional modules can be stored in a storage medium, which may be any of various mediums capable of storing program codes, such as a USB disk, a mobile hard disk, a Read Only Memory (ROM), a Random Access Memory (RAM), a magnetic disk or an optical disc or the like, containing instructions which cause a computer device (which can be a personal computer, a server, a network device or the like) to perform at least a portion of the steps of the methods according to the embodiments of the present disclosure.

## Claims

1. A method for game data processing, performed by a server and comprising:
obtaining a data processing instruction from a client;
determining a group to which a logged-in user of the client belongs based on user information in the data processing instruction;
determining a target thread corresponding to the group from a plurality of data processing threads of the server, wherein a corresponding data processing thread of the plurality of data processing threads is configured for each group in the server; and
executing the data processing instruction by the target thread, so as to process, by the target thread, user data corresponding to the user information in a memory of the server,
**characterized in that**
the method further comprises, prior to obtaining the data processing instruction from the client:
selecting from all users a target user satisfying a predetermined rule based on server start information, wherein the predetermined rule comprises: an online time length of a user within a predetermined time interval being larger than or equal to a predetermined time length; and
loading user data of the target user into the memory of the server.

2. The method of claim 1, **characterized in** further comprising, prior to obtaining the data processing instruction from the client:
loading all user data in a database into the memory of the server in accordance with server start information.

3. The method of claim 1, **characterized in that**:
the predetermined rule further comprises: a login frequency of a user being higher than or equal to a predetermined frequency.

4. The method of claim 3, **characterized in** further comprising, prior to executing the data processing instruction by the target thread:
determining whether the logged-in user of the client is the target user based on the user information in the data processing instruction,
wherein said executing the data processing instruction by the target thread comprises:
processing, by the target thread, the user data of the logged-in user in the memory of the server when it is determined that the logged-in user is the target user, or
loading the user data of the logged-in user in the memory of the server and processing, by the target thread, the user data of the logged-in user in the memory, when it is determined that the logged-in user is not the target user.

5. The method of any of claims 1-4, **characterized in that** a number of the plurality of data processing threads of the server is smaller than or equal to 1/2 of a total number of physical threads of the server.

6. The method of any of claims 1-4, **characterized in** further comprising, prior to obtaining the data processing instruction from the client:
dividing users into groups based on user information associated with each user, each user belonging to one group and one group including a plurality of users; and
configuring for each of the groups one corresponding data processing thread from the plurality of data processing threads of the server.

7. The method of claim 1, **characterized in that** said executing the data processing instruction by the target thread comprises:
determining whether an object to be processed by the data processing instruction is user data of a plurality of users;
calculating processing information for the user data of each of the plurality of users based on the data processing instruction when it is determined that the object to be processed by the data processing instruction is the user data of the plurality of users;
processing the user data of the plurality of users based on the processing information in the target thread corresponding to that user; and
processing, when it is determined that the object to be processed by the data processing instruction is user data of a single user, the user data of the single user.

8. A system for game data processing, the system comprising:
an instruction obtaining unit configured to obtain a data processing instruction from a client;
a group determining unit configured to determine a group to which a logged-in user of the client belongs based on user information in the data processing instruction;
a thread determining unit configured to determine a target thread corresponding to the group from a plurality of data processing threads of a server, wherein a corresponding data processing thread of the plurality of data processing threads is configured for each group in the server; and
a data processing unit configured to execute the data processing instruction by the target thread, so as to process, by the target thread, user data corresponding to the user information in a memory of the server,
**characterized in that**
the system further comprises a memory loading unit configured to, prior to the instruction obtaining unit obtaining the data processing instruction from the client: select from all users a target user satisfying a predetermined rule based on server start information, the predetermined rule including an online time length of a user within a predetermined time interval being larger than or equal to a predetermined time length; and load user data of the target user into the memory of the server.

9. A server, **characterized in** comprising at least one processor and a memory communicatively connected to the at least one processor,
wherein the memory stores instructions executable by the at least one processor, the instructions being configured to perform the method according to any of claims 1-7.

10. A computer readable storage medium having computer executable instructions stored thereon, **characterized in that** the computer executable instructions being configured to perform the method according to any of claims 1-7.

## Patentansprüche

1. Verfahren zur Verarbeitung von Spieldaten, das von einem Server durchgeführt wird und folgende Schritte umfasst:
Erhalten einer Datenverarbeitungsanweisung von einem Client;
Bestimmen einer Gruppe, zu der ein eingeloggter Benutzer des Clients gehört, auf der Basis einer Benutzerinformation in der Datenverarbeitungsanweisung;
Bestimmen eines der Gruppe entsprechenden Zielthreads aus einer Vielzahl von Datenverarbeitungsthreads des Servers, wobei ein entsprechender Datenverarbeitungsthread der Vielzahl von Datenverarbeitungsthreads für jede Gruppe in dem Server konfiguriert wird; und
Ausführen der Datenverarbeitungsanweisung durch den Zielthread, um durch den Zielthread Benutzerdaten zu verarbeiten, die der Benutzerinformation in einem Speicher des Servers entsprechen,
**dadurch gekennzeichnet, dass**
das Verfahren des Weiteren folgende Schritte vor dem Erhalten der Datenverarbeitungsanweisung von dem Client umfasst:
Auswählen eines Zielbenutzers, der eine vorbestimmte Regel auf der Basis einer Serverstartinformation erfüllt, aus allen Benutzern, wobei die vorbestimmte Regel Folgendes umfasst: eine Online-Zeitlänge eines Benutzers innerhalb eines vorbestimmten Zeitintervalls ist größer als oder gleich einer vorbestimmten Zeitlänge; und
Laden von Benutzerdaten des Zielbenutzers in den Speicher des Servers.

2. Verfahren nach Anspruch 1, **dadurch gekennzeichnet, dass** es des Weiteren folgenden Schritt vor dem Erhalten der Datenverarbeitungsanweisung von dem Client umfasst:
Laden aller Benutzerdaten in einer Datenbank in den Speicher des Servers gemäß der Serverstartinformation.

3. Verfahren nach Anspruch 1, **dadurch gekennzeichnet, dass** die vorbestimmte Regeln des Weiteren Folgendes umfasst: eine Login-Häufigkeit eines Benutzers ist höher als eine oder gleich einer vorbestimmten Häufigkeit.

4. Verfahren nach Anspruch 3, **dadurch gekennzeichnet, dass** es des Weiteren folgenden Schritt vor dem Ausführen der Datenverarbeitungsanweisung durch den Zielthread umfasst:
Bestimmen auf der Basis der Benutzerinformation in der
Datenverarbeitungsanweisung, ob der eingeloggte Benutzer des Clients der Zielbenutzer ist,
wobei das Ausführen der Datenverarbeitungsanweisung durch den Zielthread folgende Schritte umfasst:
Verarbeiten der Benutzerdaten des eingeloggten Benutzers in dem Speicher des Servers durch den Zielthread, wenn bestimmt wird, dass der eingeloggte Benutzer der Zielbenutzer ist, oder
Laden der Benutzerdaten des eingeloggten Benutzers in den Speicher des Servers und Verarbeiten der Benutzerdaten des eingeloggten Benutzers in dem Speicher durch den Zielthread, wenn bestimmt wird, dass der eingeloggte Benutzer nicht der Zielbenutzer ist.

5. Verfahren nach einem der Ansprüche 1 bis 4, **dadurch gekennzeichnet, dass** eine Anzahl der Vielzahl von Datenverarbeitungsthreads des Servers kleiner als die oder gleich der 1/2 einer Gesamtanzahl von physischen Threads des Servers ist.

6. Verfahren nach einem der Ansprüche 1 bis 4, **dadurch gekennzeichnet, dass** es des Weiteren folgende Schritte vor dem Erhalten der Datenverarbeitungsanweisung von dem Client umfasst:
Aufteilen von Benutzern in Gruppen auf der Basis einer Benutzerinformation, die jedem Benutzer zugeordnet wird, wobei jeder Benutzer zu einer Gruppe gehört und wobei eine Gruppe eine Vielzahl von Benutzern umfasst; und
Konfigurieren eines entsprechenden Datenverarbeitungsthreads aus der Vielzahl von Datenverarbeitungsthreads des Servers für jede der Gruppen.

7. Verfahren nach Anspruch 1, **dadurch gekennzeichnet, dass** das Ausführen der Datenverarbeitungsanweisung durch den Zielthread folgende Schritte umfasst:
Bestimmen, ob ein durch die Datenverarbeitungsanweisung zu verarbeitendes Objekt Benutzerdaten von einer Vielzahl von Benutzern sind;
Berechnen von Verarbeitungsinformationen für die Benutzerdaten von jedem von der Vielzahl von Benutzern auf der Basis der Datenverarbeitungsanweisung, wenn bestimmt wird, dass das durch die Datenverarbeitungsanweisung zu verarbeitende Objekt die Benutzerdaten der Vielzahl von Benutzern sind;
Verarbeiten der Benutzerdaten der Vielzahl von Benutzern auf der Basis der Verarbeitungsinformationen in dem Zielthread, die dem Benutzer entsprechen; und,
wenn bestimmt wird, dass das durch die Datenverarbeitungsanweisung zu verarbeitende Objekt die Benutzerdaten eines einzelnen Benutzers sind,
Verarbeiten der Benutzerdaten des einzelnen Benutzers.

8. System zur Verarbeitung von Spieldaten, wobei das System Folgendes umfasst:
eine Einheit zum Erhalt von Anweisungen, die dazu ausgebildet ist, von einem Client eine Datenverarbeitungsanweisung zu erhalten;
eine Gruppenbestimmungseinheit, die dazu ausgebildet ist, eine Gruppe, zu der ein eingeloggter Benutzer des Clients gehört, auf der Basis von einer Benutzerinformation in der Datenverarbeitungsanweisung zu bestimmen;
eine Threadbestimmungseinheit, die dazu ausgebildet ist, einen der Gruppe entsprechenden Zielthread aus einer Vielzahl von Datenverarbeitungsthreads eines Servers zu bestimmen, wobei ein entsprechender Datenverarbeitungsthread der Vielzahl von Datenverarbeitungsthreads für jede Gruppe in dem Server konfiguriert ist; und
Datenverarbeitungseinheit, die dazu ausgebildet, ist die
Datenverarbeitungsanweisung durch den Zielthread auszuführen, um durch den Zielthread Benutzerdaten zu verarbeiten, die der Benutzerinformation in einem Speicher des Servers entsprechen,
**dadurch gekennzeichnet, dass**
das System des Weiteren eine Einheit zum Laden des Speichers umfasst, die dazu ausgebildet ist, bevor die Einheit zum Erhalt von Anweisungen die Datenverarbeitungsanweisung von dem Client erhält, aus allen Benutzern einen Zielbenutzer auszuwählen, der eine vorbestimmte Regel auf der Basis einer Serverstartinformation erfüllt, wobei die vorbestimmte Regel umfasst, dass eine Online-Zeitlänge eines Benutzers innerhalb eines vorbestimmten Zeitintervalls größer als oder gleich einer vorbestimmten Zeitlänge ist; und Benutzerdaten des Zielbenutzers in den Speicher des Servers zu laden.

9. Server, **dadurch gekennzeichnet, dass** er mindestens einen Prozessor und einen Speicher umfasst, der kommunikativ mit dem mindestens einen Prozessor verbunden ist,
wobei der Speicher Anweisungen speichert, die durch den mindestens einen Prozessor ausführbar sind, wobei die Anweisungen dazu ausgebildet sind, das Verfahren nach einem der Ansprüche 1 bis 7 durchzuführen.

10. Computerlesbares Speichermedium mit darauf gespeicherten computerausführbaren Anweisungen, **dadurch gekennzeichnet, dass** die computerausführbaren Anweisungen dazu ausgebildet sind, das Verfahren nach einem der Ansprüche 1 bis 7 durchzuführen.

## Revendications

1. Procédé pour le traitement de données de jeu, ledit procédé étant effectué par un serveur et comprenant les étapes suivantes :
obtenir d'un client une instruction de traitement de données ;
déterminer un groupe auquel appartient un utilisateur connecté du client sur la base d'une information utilisateur dans l'instruction de traitement de données ;
déterminer un fil cible qui correspond au groupe à partir d'une pluralité de fils de traitement de données du serveur, dans lequel un fil de traitement de données correspondant de la pluralité de fils de traitement de données est configuré pour chaque groupe dans le serveur ; et
exécuter l'instruction de traitement de données par le fil cible pour traiter des données utilisateur qui correspondent à l'information utilisateur dans une mémoire du serveur par le fil cible,
**caractérisé en ce que**
le procédé comprend en outre les étapes suivantes avant l'étape consistant à obtenir du client l'instruction de traitement de données :
sélectionner parmi tous les utilisateurs un utilisateur cible qui satisfait à une règle prédéterminée sur la base d'une information de démarrage du serveur, dans lequel la règle prédéterminée comprend : une durée de temps en ligne d'un utilisateur dans un intervalle de temps prédéterminé étant supérieure ou égale à une durée de temps prédéterminée ; et
charger des données utilisateur de l'utilisateur cible dans la mémoire du serveur.

2. Procédé selon la revendication 1, **caractérisé en ce qu'**il comprend en outre l'étape suivante avant l'étape consistant à obtenir l'instruction de traitement de données par un client :
charger toutes les données utilisateur dans une base de données dans la mémoire du serveur conformément à l'information de démarrage du serveur.

3. Procédé selon la revendication 1, **caractérisé en ce que**
la règle prédéterminée comprend en outre : une fréquence de connexion d'un utilisateur étant supérieure ou égale à une fréquence prédéterminée.

4. Procédé selon la revendication 3, **caractérisé en ce qu'**il comprend en outre l'étape suivante avant l'étape consistant à exécuter l'instruction de traitement de données par le fil cible :
déterminer sur la base de l'information utilisateur dans l'instruction de traitement de données si l'utilisateur connecté du client est l'utilisateur cible,
dans lequel ladite étape consistant à exécuter l'instruction de traitement de données par le fil cible comprend les étapes suivantes :
traiter les données utilisateur de l'utilisateur connecté dans la mémoire du serveur par le fil cible lorsqu'il est déterminé que l'utilisateur connecté est l'utilisateur cible, ou
charger les données utilisateur de l'utilisateur connecté dans la mémoire du serveur et traiter les données utilisateur de l'utilisateur connecté dans la mémoire par le fil cible lorsqu'il est déterminé que l'utilisateur connecté n'est pas l'utilisateur cible.

5. Procédé selon l'une quelconque des revendications 1 à 4, **caractérisé en ce qu'**un nombre de la pluralité de fils de traitement de données du serveur est inférieur ou égal à la 1/2 d'un nombre total de fils physiques du serveur.

6. Procédé selon l'une quelconque des revendications 1 à 4, **caractérisé en ce qu'**il comprend en outre les étapes suivantes avant l'étape consistant à obtenir du client l'instruction de traitement de données :
diviser des utilisateurs en groupes sur la base d'une information utilisateur associée á chaque utilisateur, chaque utilisateur appartenant à un groupe et un groupe comprenant une pluralité d'utilisateurs ; et
configurer pour chacun des groupes un fil de traitement de données à partir de la pluralité de fils de traitement de données du serveur.

7. Procédé selon la revendication 1, **caractérisé en ce que** ladite étape consistant à exécuter l'instruction de traitement de données par le fil cible comprend les étapes suivantes :
déterminer si un objet à traiter par l'instruction de traitement de données sont des données utilisateur d'une pluralité d'utilisateurs ;
calculer des informations de traitement pour les données utilisateur de chacun de la pluralité d'utilisateurs sur la base de l'instruction de traitement de données lorsqu'il est déterminé que l'objet à traiter par l'instruction de traitement de données sont des données utilisateur de la pluralité d'utilisateurs ;
traiter les données d'utilisateur de la pluralité d'utilisateurs sur la base des informations de traitement dans le fil cible qui correspond à cet utilisateur ; et,
lorsqu'il est déterminer que l'objet à traiter par l'instruction de traitement de données sont des données utilisateur d'un seul utilisateur, traiter les données utilisateur du seul utilisateur.

8. Système pour le traitement de données de jeu, ledit système comprenant :
une unité d'obtention d'instructions configurée pour obtenir d'un client une instruction de traitement de données ;
une unité de détermination de groupes configurée pour déterminer un groupe auquel appartient un utilisateur connecté du client sur la base d'une information utilisateur dans l'instruction de traitement de données ;
une unité de détermination de fils configurée pour déterminer un fil cible qui correspond au groupe à partir d'une pluralité de fils de traitement de données d'un serveur, dans lequel un fil de traitement de données correspondant de la pluralité de fils de traitement de données est configuré pour chaque groupe dans le serveur ; et
une unité de traitement de données configurée pour exécuter l'instruction de traitement de données par le fil cible pour traiter des données utilisateur qui correspondent à l'information utilisateur dans une mémoire du serveur par le fil cible,
**caractérisé en ce que**
le système comprend en outre une unité de chargement de la mémoire configurée pour sélectionner parmi tous les utilisateurs, avant que l'unité d'obtention d'instructions obtienne du client l'instruction de traitement de données, un utilisateur cible qui satisfait à une règle prédéterminée sur la base d'une information de démarrage du serveur, dans lequel la règle prédéterminée comprend qu'une durée de temps en ligne d'un utilisateur dans un intervalle de temps prédéterminé est supérieure ou égale à une durée de temps prédéterminée ; et pour charger des données utilisateur de l'utilisateur cible dans la mémoire du serveur

9. Serveur, **caractérisé en ce qu'**il comprend au moins un processeur et une mémoire qui est reliée de manière communicative à l'au moins un processeur,
dans lequel la mémoire stocke des instructions exécutables par l'au moins un processeur, les instructions étant configurées pour effectuer le procédé selon l'une quelconque des revendications 1 à 7.

10. Support de stockage lisible par ordinateur ayant stocké sur celui-ci des instructions exécutables par ordinateur, **caractérisé en ce que** les instructions exécutables par ordinateur sont configurées pour effectuer le procédé selon l'une quelconque des revendications 1 à 7.
